# EUROPEAN PATENT SPECIFICATION

(11) **EP 3 898 119 B1**
(45) Date of publication and mention of the grant of the patent: **12.07.2023**
(21) Application number: 19805596.4
(22) Date of filing: 13.11.2019
(51) Int. Cl.: B25F 5/00, G05B 19/418, G06F 21/10

(54) **A METHOD, A TOOL CONTROLLER AND COMPUTER PROGRAM TO ENABLE DIFFERENT FUNCTIONALITY SETS FOR AT LEAST A FIRST AND A SECOND TOOL ASSOCIATED WITH A TOOL CONTROLLER**
VERFAHREN, WERKZEUGSTEUERGERÄT UND COMPUTERPROGRAMM ZUR AKTIVIERUNG VERSCHIEDENER FUNKTIONALITÄTSGRUPPEN FÜR MINDESTENS EIN ERSTES UND EIN ZWEITES WERKZEUG, DIE EINEM WERKZEUGSTEUERGERÄT ZUGEORDNET SIND
PROCÉDÉ, DISPOSITIF DE COMMANDE D'OUTIL ET PROGRAMME INFORMATIQUE POUR ACTIVER DIFFÉRENTS ENSEMBLES DE FONCTIONNALITÉS POUR AU MOINS UN PREMIER ET UN SECOND OUTIL ASSOCIÉS À UN DISPOSITIF DE COMMANDE D'OUTIL

(30) Priority: 17.12.2018 SE 1830362
(43) Date of publication of application: 27.10.2021
(73) Proprietor: Atlas Copco Industrial Technique AB, 105 23 Stockholm (SE)
(72) Inventor: CONNING, Osborn, 116 47 Stockholm (SE); KARLSSON, Robert, 18257 Danderyd (SE); WÅHLIN, Erik, 112 65 Stockholm (SE)
(74) Representative: Hagström, Åsa Charlotta
(86) International application number: PCT/EP2019/081109
(87) International publication number: WO 2020/126232

(56) References cited:
- EP-A2- 1 528 454
- DE-A1-102012 112 835

## Description

### TECHNICAL FIELD

The present disclosure relates to a method, a tool controller, and a computer program to enable different functionality sets for at least a first and a second tool associated with a tool controller

### BACKGROUND

Assembling of today are often complex. An assembling process may include assembling more or less complex objects where the components are assembled together. It is often high requirements on the manufacturing steps performed so that the manufacturing steps are performed correctly.

In assembling processes, different types of tools are used. It is often important that the tools are able to perform different types of functions. However some tools can only perform less advanced functions. While other tools can perform more advanced functions. There is therefore a need to control which types of functions that can be performed by different types of tools.

It is also important that the results from the different types of tool are presented and stored in an appropriate way.

There is therefore a need for an improved solution to enable flexible functionality sets for different types of tools. And thereby provide a solution that capture different types of functionality requirements for different tools.

DE 10 2012 112 835 A1 discloses a power tool system using a license server.

### SUMMARY

It is an object of the present disclosure to address at least some of the problems outlined above, e.g. to ensure flexible functionality sets for different tools. And thereby provide a solution that capture new functionality requirements for different tools.

Another object of the present disclosure is to enable new functions of a tool controller without changing the actual software of the tool controller and thereby making unforeseen changes to the tool controller. This makes it possible to adapt to new requirements without software updates of the tool controller and its corresponding long lead times.

The disclosure relates to an electric tightening tool controller according to claim 1 and to a method according to claim 8.

### BRIEF DESCRIPTION OF DRAWINGS

The solution will now be described in more detail by means of exemplary embodiments and with reference to the accompanying drawings, in which:
Fig. 1 is a block diagram of a tool controller 100 according to an exemplary embodiment of the present disclosure.
Fig. 2 is a block diagram of a tool controller 100 according to an exemplary embodiment of the present disclosure.
Fig. 3 is a block diagram of a tool controller system 400 according to an exemplary embodiment of the present disclosure.
Fig. 4 illustrates a flowchart of a method according to an exemplary embodiment.

### DETAILED DESCRIPTION

Briefly described, a solution is provided to enable different functionality sets for at least a first and a second tool associated with a tool controller.

Thus, an object of the present disclosure is to provide flexible functionality sets for different tools associated with a tool controller. And thereby provide a solution that capture new functionality requirements for different tools.

Another object is to provide flexibility in the way in which different tools functions. This is achieved by providing at least a first and a second license type which specifies a first and a second set of functions allowed to be performed by at least the first tool and the second too.

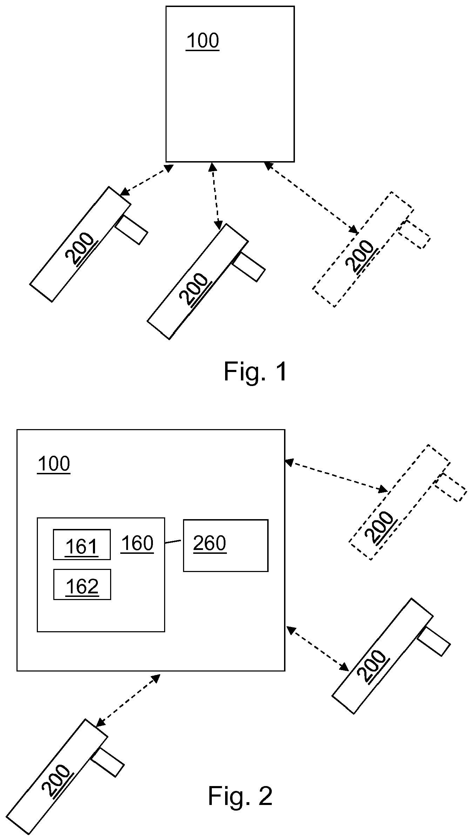

Fig. 1 illustrates a block diagram of a tool controller 100 according to an exemplary embodiment of the present disclosure. The tool controller 100 controls the functionality of at least one tool 200 associated with the tool controller 100. The tools 200 can either be connected to the tool controller 100 via a wire, or be wirelessly connected to the tool controller 100. In case the tool 20 is an electric tightening tool 200 the tool controller 100 among others control the tightening that the electric tightening tool 200 should perform. For instance how hard the electric tightening tool should tighten a screw joint. Or to which angle the electric tightening tool should tighten the screw joint. According to one embodiment the tool controller 100 also controls which results that are presented from the tool controller.

The tool controller 100 is operative to enable different functionality sets for at least a first and a second tool associated with the tool controller 100. The tool controller 100 is operative to retrieve at least a first licence type. The first licence type specifies a first set of functions allowed to be performed by at least the first tool 200. The tool controller 100 is also operative to retrieve at least a second licence type. The second licence type specifies a second set of functions allowed to be performed by at least the second tool 200. The tool controller 100 is further operative to enable the first set of functions for at least the first tool 200. And enable the second set of functions for at least the second tool 200.

The tool controller 100 is thus operative to retrieve at least a first and a second license type. Which means that according to exemplary embodiments the tool controller 100 also retrieves more license types. The license types can be of other types as well. Where the other license types specifies other types of functionality sets that the first and second license types. Thus the tool controller 100 can enable many different sets of function sets for many different tools 200.

According to one exemplary embodiment these license types can be of the first and/or the second license type or any other license type. The license types can for instance be of third, fourth, fifth or sixth type of license. Where the different license types specifies different sets of functions.

According to one exemplary embodiments the sets of functions of the different license types can be changed over time. In one exemplary embodiment first set of functions and the second sets of functions can be changed over time. This without changing the tool controller software. In one exemplary embodiment no operator needs to update the licenses types on the tool controller. Instead the license types are automatically updated through a license server.

If for instance there is a requirement that a certain type of tool and/or functions is used more often together with the tool controller. But this type of tool and/or function is not allowed according to the current license types on the tool controller. One type of license type can then be changed so that the type of tool and/or function are allowed together with the tool controller.

According to exemplary embodiment set of functions also means the types of tools that are allowed together with the tool controller.

The first and the second tools are electric tightening tools. The first and/or second set of functions may comprise types of tightening strategies that the first and second tightening tools are allowed to perform.

In another exemplary embodiment the first and/or second set of functions comprising types of result data that the tool controller 100 can provide from the first and second tools. In the exemplary embodiment where of the first and the second tools are electric tightening tools the first and/or second set of functions may comprise types of result data that the tool controller 100 can provide from the first and second tightening tools.

In another exemplary embodiment of the tool controller 100 the first tool 200 is associated with a first tool controller user interface part and the second tool 200 is associated with a second tool controller interface part. In this exemplary embodiment the first and the second tool controller interface parts are separate parts of the tool controller interface. In this embodiment the first and the second tool controller interface parts respectively control the functionality of the first and second tools respectively.

In one exemplary embodiment the first licence type is associated with the first tool controller user interface part and the second licence is associated with the second tool controller user interface part.

The first control interface part can then for instance control types of tightening that the first electric tightening tools can perform. And the second tool controller interface control which types of tightening that the second electric tightening tool can perform.

In a further exemplary of the tool controller 100 the first and/or second licence types specifies the type of tool 200 that can be used together with the first and/or second function sets.

According to one exemplary embodiment of the tool controller 100 the first and/or second license types are retrieved via a network connection of the tool controller 100.

The tool controller interface parts can be accessed via a network connection to the tool controller 100. Thus it is not necessary to physically interacts tool controller 200 in order to operate the tool controller 100.

The tool controller 100 is implemented in the tool 200. The tool controller 100 is integrated in the tool 200. The tool controller 100 interface parts can be accessed via a network connection to the tool 200. Thus it is not necessary to physically interact with tool 200 in order to operate the tool controller 100. The tool controller 200 can be accessed via a network connection to the tool 100. Other tools 200 that do not have an integrated tool controller 100 can use the tool controller 200 integrated in the tool 100 via a network connection.

According to one exemplary embodiment functions in the functionality sets specified by the different license types can be of many different types.

Figure 2 is block diagram of exemplary embodiments of the tool controller 100. The tool controller 100 further comprise a processor 160 arranged to control the tool controller 100. The tool controller 100 also comprises a memory 260 containing instructions executable by the processor 160.

The processor 160 and the memory are the same for the tool controller 200 and the tool 100. The processor 160 is a Central Processing Unit, CPU, microcontroller, Digital Signal Processor, DSP, or any other suitable type of processor capable of executing computer program code. The memory 260 is a Random Access Memory, RAM, a Read Only Memory, ROM, or a persistent storage, e.g. a single or combination of magnetic memory, optical memory, or solid state memory or even remotely mounted memory. According to one aspect, the disclosure further relates to the above mentioned computer program, comprising computer readable code which, when run on the tool controller 100 causes the tool controller 100 to perform any of the aspects of the disclosure described herein.

When the above-mentioned computer program code is run in the processor 160 of the tool controller 100 it causes the tool controller 100 to be operative to retrieve at least a first licence type. The first licence type specifies a first set of functions allowed to be performed by at least the first tool 200. And further retrieve at least a second licence type. The second licence type specifies a second set of functions allowed to be performed by the at least the second tool 200. Next enable the first set of functions for at least the first tool 200. And enable the second set of functions for at least the second tool 200.

According to one aspect of the disclosure the processor 160 comprises one or several of:
- a retrieving module 161 adapted to retrieve at least a first license type. The first license type specifies a first set of functions allowed to be performed by at least the first tool 200.
- the retrieving module 161 being further adapted to retrieve at least a second licence type. The second licence type specifies a second set of functions allowed to be performed by the at least the second tool 200.
- an enabling module 162 adapted to enable the first set of functions for at least the first tool 200. And enable the second set of functions for at least the second tool 200.

The retrieving module 161, enabling module 162 are implemented in hardware or in software or in a combination thereof. The modules 161, 162 are according to one aspect implemented as a computer program stored in the memory 260 which run on the processor 160. The tool controller 100 is further configured to implement all the aspects of the disclosure as described herein.

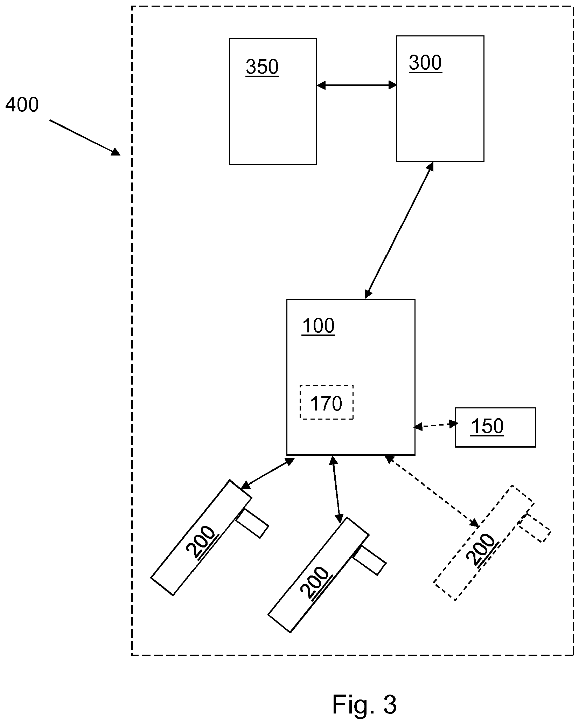

Referring to figure 3, another aspect of the present disclosure relates to a tool controller system 400. The tool controller system 400 comprising according to one exemplary embodiment a License Portal 350 and a Local License Server 300. The Local License Server 300 is connected to the License Portal 350. According to one exemplary embodiment the tool controller 100 retrieves at least the first license type and the second license type from the Local License Server 300. According to one exemplary embodiment the tool controller 100 regularly verifies the at least first and the second license types towards the Local License Server 300. In one exemplary embodiment the at least first and second license types are expired in case the tool controller 100 does not connect to the Local License Server 300 and verifies the first license type and the second license types. Verification of the first and second license types towards the Local License Server 300 can for instance be required once a month, or any other appropriate time interval.

According to another exemplary embodiment no Local License Server 300 is available. Then in one exemplary embodiment a hardware dongle 150 can be connected to the tool controller 100. The hardware dongle 150 comprises at least the first license type and the second license type. According to one exemplary embodiment the hard ware dongle 150 is a USB dongle 150 having a secured area inside the USB dongle 150 together with a hardware based identifier and a flash drive volume.

According to one exemplary embodiment the hard ware dongle 150 has an area inside the secured that will be used to store at least the first license type and the second license type. This are is denoted dongle trusted storage. A controller trusted storage also exists in the tool controller 100 that holds at least the first license type and the second license type for the tool controller 100. The at least first license type and the second license type are then moved between the dongle trusted storage and the controller trusted storage.

According to one exemplary embodiment the tool controller 100 trusted storage is placed in a removable tool controller module 170 which among others stores the configuration of the tool controller 100. In this embodiment it is possible to move the at least first license type and the second license type and the configuration to another tool controller 100 by moving the tool controller module 170 to another tool controller 100.

According to one exemplary embodiment the hard ware dongle 150 can be used to load new license types from the Local License Server 300. When the hard ware dongle 150 then is inserted in the tool controller 100 at least the first license type and the second license type will be moved to the tool controller 100 trusted storage.

According to one exemplary embodiment the process of retrieving the at least first license type and the second license type through the hard ware dongle 150 is the following. The at least first license type and the second license type are setup and reserved in the Local License Server 300. Then downloaded into the hard ware dongle 150. The hard ware dongle 150 is inserted in the tool controller 100. The tool controller 100 is informed about the hard ware dongle 150. Then the tool controller 100 retrieves the at least first license type and the second license. And further enables the first set of functions for at least the first tool 200 and enables the second set of functions for at least the second tool 200.

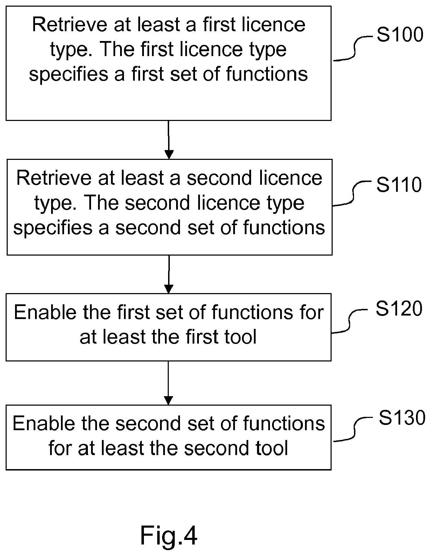

According to one exemplary embodiment the at least first license type and the second license type can each respectively be assigned to a tool control interface part (not shown) of the tool controller 100. According to exemplary embodiments only retrieved licenses types that not already have been enabled for a tool 200 can be enabled for another tool 200. According to one exemplary embodiment each license type is associated with license type features. In exemplary embodiment the features are dependent of the license type, i.e. some features are only allowed in combination with certain license types Fig. 4 illustrates a flowchart of a method for enabling different functionality sets for at least a first and a second tool 200. The method comprising the steps of retrieving S100 at least a first license type, the first license type specifies a first set of functions allowed to be performed by at least a first tool 200. In a next step S110, the method comprising retrieving at least a second license type. The second license type specifies a second set of functions allowed to be performed by at least a second tool 200. Further in the next step S120, the method comprising the step of enabling S120 the first set of functions for at least the first tool 200. In yet another step S130, the method comprising enabling S130 the second set of functions for at least the second tool 200.

The first and second tools 200 are electric tightening tools. According to another exemplary embodiment of the method, the first and/or the second set of functions comprising types of tightening strategies that the first and second tools 200 are allowed to perform.

According to one exemplary embodiment of the present disclosure the first and/or second set of functions comprising types of result data that the tool controller 100 can provide from the first and second tools 200.

In yet another exemplary embodiment of the present disclosure the first tool 200 is associated with a first tool controller interface parts and the second tool 200 is associated with a second tool controller interface parts.

According to another exemplary embodiment of the present disclosure the first license is associated with the first tool controller user interface part and the second license is associated with the second tool controller interface part.

Aspects of the disclosure are described with reference to the drawings, e.g., block diagrams and/or flowcharts. It is understood that several entities in the drawings, e.g., blocks of the block diagrams, and also combinations of entities in the drawings, can be implemented by computer program instructions, which instructions can be stored in a computer-readable memory.

## Claims

1. An electric tightening tool controller (100) operative to control how hard an electric tightening tool should tighten a screw joint and to enable different functionality sets for at least a first and a second electric tightening tool (200) associated with the electric tightening tool controller (100),
wherein the electric tightening tool controller is integrated in the electric tightening tool, and
wherein the electric tightening tool controller is arranged to be used, via a network connection, by other electric tightening tools that do not have an integrated tool controller,
wherein the electric tightening tool controller (100) is operative to:
- retrieve at least a first licence type; the first licence type specifies a first set of functions allowed to be performed by at least the first electric tightening tool (200);
- retrieve at least a second licence type; the second licence type specifies a second set of functions allowed to be performed by the at least the second electric tightening tool (200);
- enable the first set of functions for at least the first electric tightening tool (200); and
- enable the second set of functions for at least the second electric tightening tool (200) .

2. The electric tightening tool controller (100) according to claim 1, wherein the first and/or second set of functions comprising types of tightening strategies that the first and second electric tightening electric tightening tools (200) are allowed to perform.

3. The electric tightening tool controller (100) according to claims 1 or 2, wherein the first and/or second set of functions comprising types of result data that the electric tightening tool controller (100) can provide from the first and second electric tightening tools.

4. The electric tightening tool controller (100) according to claims 1 to 3, wherein the first electric tightening tool (200) is associated with a first electric tightening tool controller user interface parts and the second electric tightening tool (200) is associated with a second electric tightening tool controller user interface parts.

5. The electric tightening tool controller (100) according to claim 4, wherein the first licence is associated with the first electric tightening tool controller user interface part and the second licence is associated with the second electric tightening tool controller user interface part.

6. The electric tightening tool controller (100) according to any of claims 1 to 5, wherein the first and/or second licence types specifies the type of electric tightening tool (200) that can be used together with the first and/or second function sets.

7. The electric tightening tool controller (100) according to any of claims 1 to 6, wherein the first and/or second licence types are retrieved via a network connection of the electric tightening tool controller (100).

8. A method for enabling different functionality sets for at least a first and a second electric tightening tool (200) controlled by an electric tightening tool controller that controls how hard an electric tightening tool should tighten a screw joint,
wherein the electric tightening tool controller is integrated in the electric tightening tool, and
wherein the electric tightening tool controller is arranged to be used, via a network connection, by other electric tightening tools that do not have an integrated tool controller,
the method comprising the steps of:
- retrieving (S100) at least a first licence type; the first licence type specifies a first set of functions allowed to be performed by at least a first electric tightening tool (200);
- retrieving (S110) at least a second licence type; the second licence type specifies a second set of functions allowed to be performed by at least a second electric tightening tool (200);
- enabling (S120) the first set of functions for at least the first electric tightening tool (200); and
- enabling (S130) the second set of functions for at least the second electric tightening tool (200).

9. The method according to claim 8, wherein the first and/or second set of functions comprising types of tightening strategies that the first and second electric tightening tools (200) are allowed to perform.

10. The method according to claims 8 or 9, wherein the first and/or second set of functions comprising types of result data that the electric tightening tool controller (100) can provide from the first and second electric tightening tools (200) .

11. The method according to claims 8 to 10, wherein the first electric tightening tool (200) is associated with a first electric tightening tool controller user interface part and the second electric tightening tool (200) is associated with a second electric tightening tool controller user interface part.

12. The method according to claim 11, wherein the first licence is associated with the first electric tightening tool controller user interface part and the second licence is associated with the second electric tightening tool controller user interface part.

13. A computer-readable storage medium, having stored there on a computer program which, when run in an electric tightening tool controller (100), causes the electric tightening tool controller (100) to perform the method as claimed in any of claims 8 to 12.

## Patentansprüche

1. Elektrische Anziehungswerkzeugsteuerung (100), die betriebsfähig ist, um zu steuern, wie stark ein elektrisches Anziehungswerkzeug ein Schraubgelenk anziehen sollte und um unterschiedliche Funktionssätze für mindestens ein erstes und ein zweites elektrisches Anziehungswerkzeug (200) zu aktivieren, die der elektrischen Anziehungswerkzeugsteuerung (100) zugeordnet sind,
wobei die elektrische Anziehungswerkzeugsteuerung in das elektrische Anziehungswerkzeug integriert ist, und
wobei die elektrische Anziehungswerkzeugsteuerung angeordnet ist, um über eine Netzwerkverbindung durch andere elektrische Anziehungswerkzeuge verwendet zu werden, die keine integrierte Werkzeugsteuerung aufweisen,
wobei die elektrische Anziehungswerkzeugsteuerung (100) betriebsfähig ist, zum:
- Abrufen mindestens einer ersten Lizenzart; wobei die erste Lizenzart einen ersten Funktionssatz angibt, der durch mindestens das erste elektrische Anziehungswerkzeug (200) durchgeführt werden kann;
- Abrufen mindestens einer zweiten Lizenzart; wobei die zweite Lizenzart einen zweiten Funktionssatz angibt, der durch das mindestens das zweite elektrische Anziehungswerkzeug (200) durchgeführt werden kann;
- Aktivieren des ersten Funktionssatzes für mindestens das erste elektrische Anziehungswerkzeug (200); und
- Aktivieren des zweiten Funktionssatzes für mindestens das zweite elektrische Anziehungswerkzeug (200).

2. Elektrische Anziehungswerkzeugsteuerung (100) nach Anspruch 1, wobei der erste und/oder der zweite Funktionssatz Arten von Anziehungsstrategien umfasst, die das erste und das zweite elektrische Anziehung elektrische Anziehungswerkzeug (200) durchführen können.

3. Elektrische Anziehungswerkzeugsteuerung (100) nach den Ansprüchen 1 oder 2, wobei der erste und/oder der zweite Funktionssatz Arten von Ergebnisdaten umfasst, die die elektrische Anziehungswerkzeugsteuerung (100) von dem ersten und dem zweiten elektrischen Anziehungswerkzeug bereitstellen kann.

4. Elektrische Anziehungswerkzeugsteuerung (100) nach den Ansprüchen 1 bis 3, wobei das erste elektrische Anziehungswerkzeug (200) einem ersten Benutzerschnittstellenteil der elektrischen Anziehungswerkzeugsteuerung zugeordnet ist und das zweite elektrische Anziehungswerkzeug (200) einem zweiten Benutzerschnittstellenteil der elektrischen Anziehungswerkzeugsteuerung zugeordnet ist.

5. Elektrische Anziehungswerkzeugsteuerung (100) nach Anspruch 4, wobei die erste Lizenz dem ersten Benutzerschnittstellenteil der elektrischen Anziehungswerkzeugsteuerung zugeordnet ist und die zweite Lizenz dem zweiten Benutzerschnittstellenteil der elektrischen Anziehungswerkzeugsteuerung zugeordnet ist.

6. Elektrische Anziehungswerkzeugsteuerung (100) nach einem der Ansprüche 1 bis 5, wobei die erste und/oder die zweite Lizenzart die Art des elektrischen Anziehungswerkzeugs (200) angibt, das zusammen mit dem ersten und/oder dem zweiten Funktionssatz verwendet werden kann.

7. Elektrische Anziehungswerkzeugsteuerung (100) nach einem der Ansprüche 1 bis 6, wobei die erste und/oder die zweite Lizenzart über eine Netzwerkverbindung der elektrischen Anziehungswerkzeugsteuerung (100) abgerufen werden.

8. Verfahren zum Aktivieren unterschiedlicher Funktionssätze für mindestens ein erstes und ein zweites elektrisches Anziehungswerkzeug (200), die durch eine elektrische Anziehungswerkzeugsteuerung gesteuert werden, die steuert, wie stark ein elektrisches Anziehungswerkzeug ein Schraubgelenk anziehen sollte,
wobei die elektrische Anziehungswerkzeugsteuerung in das elektrische Anziehungswerkzeug integriert ist, und
wobei die elektrische Anziehungswerkzeugsteuerung angeordnet ist, um über eine Netzwerkverbindung durch andere elektrische Anziehungswerkzeuge verwendet zu werden, die keine integrierte Werkzeugsteuerung aufweisen,
das Verfahren umfassend die Schritte:
- Abrufen (S100) mindestens einer ersten Lizenzart; wobei die erste Lizenzart einen ersten Funktionssatz angibt, der durch mindestens ein erstes elektrisches Anziehungswerkzeug (200) durchgeführt werden kann;
- Abrufen (S110) mindestens einer zweiten Lizenzart; wobei die zweite Lizenzart einen zweiten Funktionssatz angibt, der durch mindestens ein zweites elektrisches Anziehungswerkzeug (200) durchgeführt werden kann;
- Aktivieren (S120) des ersten Funktionssatzes für mindestens das erste elektrische Anziehungswerkzeug (200); und
- Aktivieren (S130) des zweiten Funktionssatzes für mindestens das zweite elektrische Anziehungswerkzeug (200).

9. Verfahren nach Anspruch 8, wobei der erste und/oder der zweite Funktionssatz Arten von Anziehungsstrategien umfasst, die das erste und das zweite elektrische Anziehungswerkzeug (200) durchführen können.

10. Verfahren nach Anspruch 8 oder 9, wobei der erste und/oder der zweite Funktionssatz Arten von Ergebnisdaten umfasst, die die elektrische Anziehungswerkzeugsteuerung (100) von dem ersten und dem zweiten elektrischen Anziehungswerkzeug (200) bereitstellen kann.

11. Verfahren nach den Ansprüchen 8 bis 10, wobei das erste elektrische Anziehungswerkzeug (200) einem ersten Benutzerschnittstellenteil der elektrischen Anziehungswerkzeugsteuerung zugeordnet ist und das zweite elektrische Anziehungswerkzeug (200) einem zweiten Benutzerschnittstellenteil der elektrischen Anziehungswerkzeugsteuerung zugeordnet ist.

12. Verfahren nach Anspruch 11, wobei die erste Lizenz dem ersten Benutzerschnittstellenteil der elektrischen Anziehungswerkzeugsteuerung zugeordnet ist und die zweite Lizenz dem zweiten Benutzerschnittstellenteil der elektrischen Anziehungswerkzeugsteuerung zugeordnet ist.

13. Computerlesbares Speichermedium, das ein Computerprogramm darauf gespeichert aufweist, das, wenn es in einer elektrischen Anziehungswerkzeugsteuerung (100) ausgeführt wird, die elektrische Anziehungswerkzeugsteuerung (100) veranlasst, das Verfahren nach einem der Ansprüche 8 bis 12 durchzuführen.

## Revendications

1. Dispositif de commande d'outil de serrage électrique (100) fonctionnel pour commander la force avec laquelle un outil de serrage électrique doit serrer un joint à vis et pour activer différents ensembles de fonctionnalités pour au moins un premier et un second outil de serrage électrique (200) associés au dispositif de commande d'outil de serrage électrique (100),
dans lequel le dispositif de commande d'outil de serrage électrique est intégré dans l'outil de serrage électrique, et
dans lequel le dispositif de commande d'outil de serrage électrique est agencé pour être utilisé, par l'intermédiaire d'une connexion réseau, par d'autres outils de serrage électrique qui n'ont pas de dispositif de commande d'outil intégré,
dans lequel le dispositif de commande d'outil de serrage électrique (100) est fonctionnel pour :
- récupérer au moins un premier type de licence ; le premier type de licence spécifie un premier ensemble de fonctions autorisées à être réalisées par au moins le premier outil de serrage électrique (200) ;
- récupérer au moins un second type de licence ; le second type de licence spécifie un second ensemble de fonctions autorisées à être réalisées par l'au moins le second outil de serrage électrique (200) ;
- activer le premier ensemble de fonctions pour au moins le premier outil de serrage électrique (200) ; et
- activer le second ensemble de fonctions pour au moins le second outil de serrage électrique (200).

2. Dispositif de commande d'outil de serrage électrique (100) selon la revendication 1, dans lequel le premier et/ou le second ensemble de fonctions comprennent des types de stratégies de serrage que les premier et second outils de serrage électrique de serrage électrique (200) sont autorisés à réaliser.

3. Dispositif de commande d'outil de serrage électrique (100) selon les revendications 1 ou 2, dans lequel le premier et/ou le second ensemble de fonctions comprennent des types de données de résultat que le dispositif de commande d'outil de serrage électrique (100) peut fournir à partir des premier et second outils de serrage électrique.

4. Dispositif de commande d'outil de serrage électrique (100) selon les revendications 1 à 3, dans lequel le premier outil de serrage électrique (200) est associé à une première partie d'interface utilisateur de dispositif de commande d'outil de serrage électrique et le second outil de serrage électrique (200) est associé à une seconde partie d'interface utilisateur de dispositif de commande d'outil de serrage électrique.

5. Dispositif de commande d'outil de serrage électrique (100) selon la revendication 4, dans lequel la première licence est associée à la première partie d'interface utilisateur de dispositif de commande d'outil de serrage électrique et la seconde licence est associée à la seconde partie d'interface utilisateur de dispositif de commande d'outil de serrage électrique.

6. Dispositif de commande d'outil de serrage électrique (100) selon l'une quelconque des revendications 1 à 5, dans lequel les premier et/ou second types de licence spécifient le type d'outil de serrage électrique (200) qui peut être utilisé conjointement avec les premier et/ou second ensembles de fonctions.

7. Dispositif de commande d'outil de serrage électrique (100) selon l'une quelconque des revendications 1 à 6, dans lequel les premier et/ou second types de licence sont récupérés par l'intermédiaire d'une connexion réseau du dispositif de commande d'outil de serrage électrique (100).

8. Procédé destiné à activer différents ensembles de fonctionnalités pour au moins un premier et un second outil de serrage électrique (200) commandés par un dispositif de commande d'outil de serrage électrique qui commande la force avec laquelle un outil de serrage électrique doit serrer un joint à vis,
dans lequel le dispositif de commande d'outil de serrage électrique est intégré dans l'outil de serrage électrique, et
dans lequel le dispositif de commande d'outil de serrage électrique est agencé pour être utilisé, par l'intermédiaire d'une connexion réseau, par d'autres outils de serrage électrique qui n'ont pas de dispositif de commande d'outil intégré,
le procédé comprenant les étapes consistant à :
- récupérer (S100) au moins un premier type de licence ; le premier type de licence spécifie un premier ensemble de fonctions autorisées à être réalisées par au moins un premier outil de serrage électrique (200) ;
- récupérer (S110) au moins un second type de licence ; le second type de licence spécifie un second ensemble de fonctions autorisées à être réalisées par au moins un second outil de serrage électrique (200) ;
- activer (S120) le premier ensemble de fonctions pour au moins le premier outil de serrage électrique (200) ; et
- activer (S130) le second ensemble de fonctions pour au moins le second outil de serrage électrique (200).

9. Procédé selon la revendication 8, dans lequel le premier et/ou le second ensemble de fonctions comprennent des types de stratégies de serrage que les premier et second outils de serrage électrique (200) sont autorisés à être réalisées.

10. Procédé selon les revendications 8 ou 9, dans lequel le premier et/ou le second ensemble de fonctions comprennent des types de données de résultat que le dispositif de commande d'outil de serrage électrique (100) peut fournir à partir des premier et second outils de serrage électrique (200).

11. Procédé selon les revendications 8 à 10, dans lequel le premier outil de serrage électrique (200) est associé à une première partie d'interface utilisateur de dispositif de commande d'outil de serrage électrique et le second outil de serrage électrique (200) est associé à une seconde partie d'interface utilisateur de dispositif de commande d'outil de serrage électrique.

12. Procédé selon la revendication 11, dans lequel la première licence est associée à la première partie d'interface utilisateur de dispositif de commande d'outil de serrage électrique et la seconde licence est associée à la seconde partie d'interface utilisateur de dispositif de commande d'outil de serrage électrique.

13. Support de stockage lisible par ordinateur, sur lequel est stocké un programme informatique qui, lorsqu'il est exécuté dans un dispositif de commande d'outil de serrage électrique (100), amène le dispositif de commande d'outil de serrage électrique (100) à réaliser le procédé selon l'une quelconque des revendications 8 à 12.
